# DEMANDE DE BREVET EUROPEEN

(11) **EP 4 632 849 A1**
(43) Date de publication de la demande: **15.10.2025**
(21) Numéro de dépôt: 25169656.3
(22) Date de dépôt: 10.04.2025
(51) Int. Cl.: H01M 8/0239, H01M 8/0273, H01M 8/1004

(54) **ASSEMBLAGE POUR PILE À COMBUSTIBLE ET PROCÉDÉ DE FABRICATION D'UN TEL ASSEMBLAGE**

(30) Priorité: 10.04.2024 FR 2403696
(71) Demandeur: Commissariat à l'Energie Atomique et aux Energies Alternatives, 75015 Paris (FR)
(72) Inventeur: TOUGNE, Claire, 38054 Grenoble Cedex 09 (FR); NAYOZE-COYNEL, Christine, 38054 Grenoble Cedex 09 (FR); SIGUENZA, Charlène, 38054 Grenoble Cedex 09 (FR)
(74) Mandataire: Hautier IP

(57) **Abrégé**

Assemblage pour pile à combustible, comprenant un empilement comportant une première couche de diffusion des gaz (2) ; des premier et deuxième renforts (4, 5) ; et une deuxième couche de diffusion des gaz (3) ; les première et deuxième couches de diffusion des gaz (2, 3) présentant respectivement deux première et deuxième faces tournées respectivement au regard des premier et deuxième renforts (4, 5) ; les première et deuxième faces présentant respectivement des première et deuxième zones ; la première zone est fixée sur le premier renfort (4), la fixation présentant une première soudure avec fusion de la première zone avec le premier renfort (4), sans fusion du premier renfort (4) ; et la deuxième zone est fixée sur le deuxième renfort (5), la fixation présentant une deuxième soudure avec fusion de la deuxième zone avec le deuxième renfort (5), sans fusion du deuxième renfort (5).

## Description

### DOMAINE TECHNIQUE

La présente invention concerne les assemblages pour pile à combustible, en particulier des piles comprenant des cellules à combustible utilisant des membranes d'échange de protons, et plus particulièrement la façon d'assembler les différents composants des assemblages des piles à combustible.

### ETAT DE LA TECHNIQUE

De façon générale, les cellules à combustible utilisant des membranes d'échange de protons, dites PEMFC (qui correspond à l'acronyme de « Proton Exchange Membrane Fuel Cell » en langue anglaise), comprennent un assemblage membrane électrode, ditAME. Un AME contient différents composants, tels qu'une membrane, deux électrodes et deux couches de diffusion des gaz, dites GDL (qui correspond à l'acronyme de « Gas Diffusion Layer » en langue anglaise). L'ensemble comprenant la membrane et les deux électrodes est noté ensemble électrodes-membrane, ou CCM (qui correspond à l'acronyme de « Catalyst Coated Membrane » en langue anglaise, c'est-à-dire membrane revêtue d'un catalyseur de part et d'autre de celle-ci). Certains AME comportent des renforts situés de part et d'autre du CCM. Dans ce cas, les AME sont appelés 7 couches, car ils comprennent une membrane, une électrode anode et une électrode cathode de part et d'autre de la membrane, un renfort de part et d'autre du CCM (formé par la membrane et les deux électrodes), et une GDL de part et d'autre du renfort et du CCM. Un renfort est utilisé pour rigidifier l'AME, il peut être réalisé en matériau plastique.

Les composants d'un AME peuvent être assemblés par une étape de collage. Par exemple, les renforts sont collés sur les bords du CCM et les GDL sont collées sur le CCM et le bord des renforts. Mais l'étape de collage est longue (par exemple supérieure à la minute), et nécessite une mise en température des matériaux des composants par un apport de température extérieure avec ajout d'un matériau collant à température ambiante ou à température supérieure à la température ambiante. L'étape de collage est en outre associée généralement à une contrainte, c'est-à-dire à un pressage à chaud des GDL sur le CCM et le bord des renforts. Mais pour effectuer l'étape de pressage à chaud, on doit utiliser une presse et des moules ou gabarits pour positionner les composants. Cela implique : un apport extérieur en température (de 130°C à 160°C et plus) ; un temps long pour le pressage (de 1 minute à plus) ; et de maintenir les composants de l'AME sous la température comprise entre 130°C et 160°C, voire plus, et sous contrainte. Par ailleurs, pour assembler les GDL, il est nécessaire d'ajouter un système collant ou adhésif pour maintenir la GDL sur le renfort, cela implique un ajout d'un matériau supplémentaire qui vient coller les GDL avec les renforts. Par ailleurs, le positionnement des différents composants doit être très précis. En outre, le pressage à chaud s'étend sur toute la surface des composants de l'AME, ce qui peut endommager le CCM.

On peut citer, par exemple, la demande de brevet US2009169946, qui divulgue un procédé de fabrication d'un AME, comprenant l'utilisation d'un film polymère thermoplastique entre la GDL et une électrode placée au contact d'une membrane. L'ensemble des composants est comprimé entre un dispositif de maintien et une enclume, et les composants sont chauffés par vibrations ultrasonores pour faire fondre le film polymère thermoplastique afin que le film polymère imprègne la couche GDL et l'électrode. Mais l'AME obtenu n'est pas suffisamment rigide pour son stockage préalable avant d'être assemblée avec des plaques bipolaires pour former une cellule à combustible.

On peut également citer la demande de brevet DE102005058370, qui divulgue un procédé utilisant un cadre de support assemblé à un CCM par l'intermédiaire de convoyeurs à rouleaux. Le procédé comprend une soudure par ultrasons du cadre support sur le CCM et une soudure par ultrasons de la GDL sur le CCM. Mais la soudure par ultrasons de la GDL sur le CCM peut endommager le CCM et diminue la durabilité de l'AME.

Un objet de la présente invention est donc de proposer des moyens pour pallier les inconvénients mentionnés ci-avant, et en particulier, de proposer des moyens pour fournir un AME ayant une bonne performance, tout en limitant la quantité de matériaux utilisés.

Un autre objet consiste à fournir un procédé de fabrication d'un AME qui soit simple et rapide.

Un autre objet est de proposer des moyens pour fournir un AME dont la rigidité est améliorée en vue, notamment, d'être plus facilement stockable avant d'être assemblé aux plaques bipolaires.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, il est proposé un procédé de fabrication d'un assemblage pour pile à combustible, comprenant une fourniture d'un empilement, l'empilement comprenant successivement selon une direction, dite d'empilement, au moins :
- une première couche de diffusion des gaz ;
- un premier renfort ;
- un deuxième renfort ; et
- une deuxième couche de diffusion des gaz ;
le procédé comprenant :
- un placement des première et deuxième couches de diffusion des gaz de sorte que les couches de diffusion des gaz présentent respectivement deux première et deuxième faces tournées respectivement au regard des premier et deuxième renforts ; les première et deuxième faces présentant respectivement des première et deuxième zones.
Le procédé comprend :
- une adhésion principale comprenant une première adhésion par ultrasons de sorte que la première zone se colle sur le premier renfort pour fixer la première zone sur le premier renfort, et une deuxième adhésion par ultrasons de sorte que la deuxième zone se colle sur le deuxième renfort pour fixer la deuxième zone sur le deuxième renfort, les premier et deuxième renforts conservant une intégrité physique en ce que les premier et deuxième renforts ne fondent pas lors de l'adhésion principale.

Un tel procédé permet de réduire considérablement le temps pour fixer les différents composants d'un assemblage membrane-électrode pour pile à combustible, et ainsi réduire les coûts de fabrication. Le procédé est simplifié en ce qu'il ne nécessite pas d'utiliser un apport d'un matériau collant pour fixer les couches de diffusion des gaz sur les renforts.

Selon un autre aspect, il est proposé un assemblage pour pile à combustible, comprenant un empilement comportant successivement selon une direction, dite d'empilement, au moins :
- une première couche de diffusion des gaz ;
- un premier renfort ;
- un deuxième renfort ; et
- une deuxième couche de diffusion des gaz ;
les première et deuxième couches de diffusion des gaz présentant respectivement deux première et deuxième faces tournées respectivement au regard des premier et deuxième renforts ; les première et deuxième faces présentant respectivement des première et deuxième zones.

La première zone est fixée sur le premier renfort, la fixation présentant une première adhésion avec collage de la première zone sur le premier renfort, sans fusion du premier renfort ; et la deuxième zone est fixée sur le deuxième renfort, la fixation présentant une deuxième adhésion avec collage de la deuxième zone sur le deuxième renfort, sans fusion du deuxième renfort.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 illustre de façon schématique une vue en perspective éclatée d'un mode de réalisation d'assemblage pour pile à combustible ;
La figure 2 illustre de façon schématique les principales étapes d'un procédé de fabrication d'un assemblage pour pile à combustible ;
Les figures 3 à 5 illustrent schématiquement, différents modes de réalisation d'un assemblage pour pile à combustible ;
La figure 6 illustre de façon schématique une vue de dessus d'une couche de diffusion des gaz fixée à un renfort ;
La figure 7 est une image illustrant une vue en coupe d'un mode de réalisation d'un assemblage par ultra-sons pour pile à combustible.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation et de mises en oeuvre de l'invention, sont énoncées ci-après des caractéristiques optionnelles qui peuvent éventuellement être utilisées en association ou alternativement.

Selon un exemple, l'empilement comprend, selon la direction d'empilement, une membrane située entre les premier et deuxième renforts.

Selon un exemple, la membrane comprend une face supérieure tournée en regard du premier renfort et une face inférieure tournée en regard du deuxième renfort, le procédé comprenant une adhésion secondaire comportant une troisième adhésion par ultrasons de sorte qu'une partie de la face supérieure de la membrane se colle sur le premier renfort et sur la face supérieure et une fixation du deuxième adhésif sur le deuxième renfort et sur la face inférieure une quatrième adhésion par ultrasons de sorte qu'une partie de la face inférieure de la membrane se colle sur le deuxième renfort, les premier et deuxième renforts conservant une intégrité physique en ce que les premier et deuxième renforts ne fondent pas lors de l'adhésion secondaire.

Selon un exemple, l'empilement comprend, selon la direction d'empilement :
- une première électrode située entre le premier renfort et la membrane ; et
- une deuxième électrode située entre la membrane et le deuxième renfort.

Selon un exemple, la première électrode comprend une face supérieure tournée en regard du premier renfort et la deuxième électrode comprend une face inférieure tournée en regard du deuxième renfort, le procédé comprenant une adhésion supplémentaire comportant une adhésion de la première électrode par ultrasons de sorte qu'une partie de la face supérieure de la première électrode se colle sur le premier renfort et une adhésion de la deuxième électrode par ultrasons de sorte qu'une partie de la face inférieure de la deuxième électrode se colle sur le deuxième renfort, les premier et deuxième renforts conservant une intégrité physique en ce que les premier et deuxième renforts ne fondent pas lors de l'adhésion supplémentaire.

Selon un exemple, l'adhésion principale est effectuée après ou simultanément à l'adhésion secondaire.

Selon un exemple, l'adhésion principale est effectuée après ou simultanément à l'adhésion supplémentaire.

Selon un exemple, les adhésions principale, secondaire et supplémentaire sont effectuées simultanément.

Selon un exemple, la première adhésion est effectuée avant ou simultanément à la deuxième adhésion.

Selon un exemple, le premier renfort présente une face externe tournée en regard de la première couche de diffusion des gaz et une face interne tournée en regard du deuxième renfort, le deuxième renfort présente une face interne tournée en regard du premier renfort et une face externe tournée en regard de la deuxième couche de diffusion des gaz, et l'empilement comprend des premier et deuxième éléments adhésifs thermiquement activables situés respectivement sur les faces internes des premier et deuxième renforts.

Selon un exemple, le procédé comprend une fixation des premier et deuxième renforts comportant une soudure par ultrasons de sorte que le premier adhésif thermiquement activable fusionne avec le deuxième adhésif thermiquement activable pour fixer le premier renfort au deuxième renfort, et que les premier et deuxième renforts conservent leur intégrité physique en ce que les premier et deuxième renforts ne fondent pas lors de la soudure par ultrasons.

Selon un exemple, la membrane comprend une face supérieure tournée en regard du premier renfort et une face inférieure tournée en regard du deuxième renfort, une partie de la face supérieure de la membrane est collée sur le premier renfort, et une partie de la face inférieure de la membrane est collée sur le deuxième renfort.

Selon un exemple, l'empilement comprend des premier et deuxième éléments adhésifs thermiquement activables situés respectivement sur les faces internes des premier et deuxième renforts.

Selon un exemple, le premier adhésif thermiquement activable est fusionné avec le deuxième adhésif thermiquement activable, sans fusion des premier et deuxième renforts.

Il est précisé que, dans le cadre de la présente invention, les termes « sur », « surmonte », « recouvre », « sous-jacent », en « vis-à-vis », « tournée au regard de » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

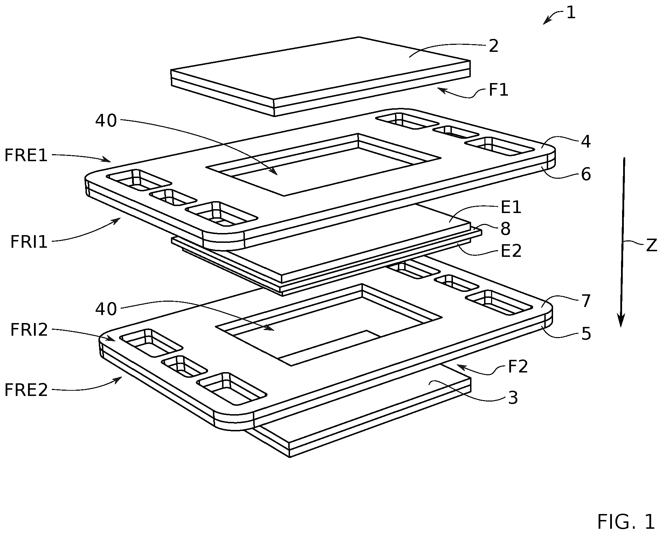

Sur la figure 1, on a représenté un procédé de fabrication d'un assemblage pour pile à combustible. L'assemblage pour pile à combustible est également noté assemblage membrane-électrode, dit AME. Le procédé est particulièrement adapté pour la fabrication des AME destinés aux piles à combustible du type PEMFC. Le procédé comprend une fourniture d'un empilement 1, l'empilement 1 comprenant successivement selon une direction Z, dite d'empilement, au moins :
- une première couche de diffusion des gaz 2 ;
- un premier renfort 4 ;
- un deuxième renfort 5 ; et
- une deuxième couche de diffusion des gaz 3.

Les première et deuxième couches de diffusion des gaz 2, 3 sont également appelées GDL. De façon générale, les GDL sont destinées à être mises en contact avec les plaques bipolaires des piles à combustibles. Les plaques bipolaires comportent des canaux pour la diffusion des gaz qui pénètrent les GDL afin d'atteindre les électrodes E1, E2 de l'AME. Les GDL sont poreuses. Certaines GDL peuvent comprendre une couche macroporeuse tournée au regard des plaques bipolaires, appelée également substrat, et une couche microporeuse appelée MPL (Micro Porous Layer en langue anglaise, c'est-à-dire couche microporeuse). De manière générale, les GDL 2, 3 comprennent un polymère de type PTFE (c'est-à-dire du polytétrafluoroéthylène). Le PTFE est un polymère thermoplastique. En particulier, la couche macroporeuse et la MPL comportent un polymère du type PTFE.

Les renforts permettent de rigidifier l'empilement 1. Les renforts 4, 5 sont généralement réalisés à partir d'un polymère thermoplastique. Par exemple, les renforts 4, 5 peuvent être en PET (i.e. Polytéréphtalate d'éthylène) ou en PEN (i.e. Poly(naphta) d'éthylène). Le PET et le PEN sont des polymères thermoplastiques.

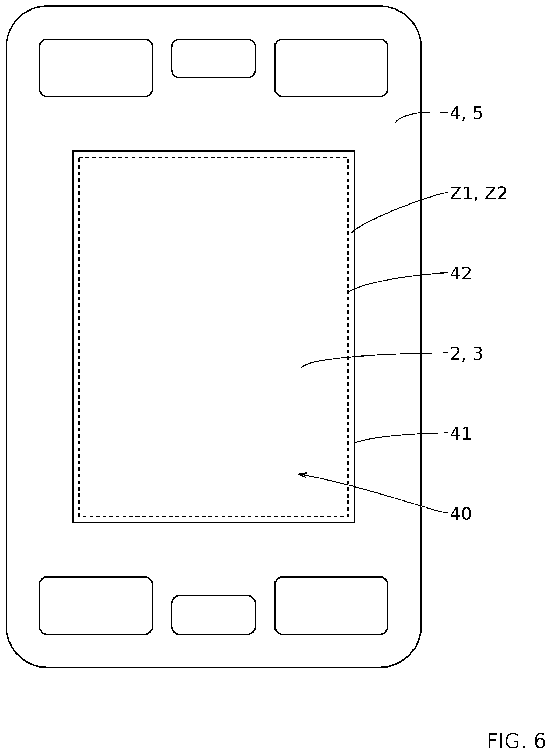

En particulier, le procédé comprend un placement des première et deuxième couches de diffusion des gaz 2, 3 de sorte que les couches de diffusion des gaz 2, 3 présentent respectivement deux première et deuxième faces F1, F2 tournées respectivement au regard des premier et deuxième renforts 4, 5. Par ailleurs, les première et deuxième faces F1, F2 présentent respectivement des première et deuxième zones Z1, Z2, comme illustré sur la figure 6.

Afin de fixer les première et deuxième couches de diffusion des gaz 2, 3 sur respectivement les premier et deuxième renforts 4, 5, le procédé comprend une adhésion principale.

L'adhésion principale comprend une première adhésion par ultrasons de sorte que la première zone Z1 se colle sur le premier renfort 4. La première adhésion permet de fixer la première zone Z1 sur le premier renfort 4. En outre, l'adhésion principale comprend une deuxième adhésion par ultrasons de sorte que la deuxième zone Z2 se colle sur le deuxième renfort 5. La deuxième adhésion permet de fixer la deuxième zone Z2 sur le deuxième renfort 5. Plus particulièrement, les premier et deuxième renforts 4, 5 conservent une intégrité physique en ce que les premier et deuxième renforts 4, 5 ne fondent pas lors de l'adhésion principale, c'est-à-dire lors des première et deuxième adhésion par ultrasons. On entend également par le fait que les renforts ne fondent pas, le fait que les renforts 4, 5 ne fondent pas sur toute leur épaisseur. L'épaisseur des renforts 4, 5 étant mesurée selon la direction d'empilement Z. On dit également que les renforts 4, 5 ne fondent pas sur plus de 90%, de préférence pas plus de 95%, de leur épaisseur totale. En d'autres termes, l'adhésion des GDL sur les renforts 4, 5 se fait principalement, voire uniquement sur la surface des GDL 2, 3, c'est-à-dire sur les première et deuxième zones Z1, Z2.

En d'autres termes, l'adhésion principale comprend une première adhésion par ultrasons de sorte que seule la première zone Z1 se colle sur le premier renfort 4 et une deuxième adhésion par ultrasons de sorte que seule la deuxième zone Z2 se colle sur le deuxième renfort 5. L'adhésion principale comprend une première adhésion par ultrasons configurée de sorte que la première zone se colle sur le premier renfort 4 et une deuxième adhésion par ultrasons configurée de sorte que la deuxième zone Z2 se colle sur le deuxième renfort 5.

Pour réaliser l'adhésion principale, on peut utiliser un appareil à ultrasons 10 configuré pour réaliser les première et deuxième adhésions. Par exemple, l'appareil à ultrasons 10 comprend un générateur d'ultrasons 11 relié à une tête sonotrode 12. On peut utiliser deux appareils à ultrasons distincts pour réaliser respectivement les premières et deuxième soudures. On utilise de préférence un seul et même appareil à ultrasons 10 pour réaliser l'adhésion principale, c'est-à-dire les première et deuxième adhésions. Basée sur la technologie à ultrasons dont la fréquence pour l'adhésion varie entre 20 et 70 kHz, l'adhésion des GDL 2, 3 sur les renforts 4, 5 est réalisée grâce à la tête sonotrode 12. La tête 12 est de préférence mise en contact avec les matériaux avec une certaine contrainte restant inférieure à 3 MPa, et entraîne alors des vibrations mécaniques (ultrasons). Ces vibrations se propagent dans les composants et génèrent de la chaleur de frottement qui provoque l'entrée en fusion des matériaux. De manière générale, les ultrasons peuvent faire fondre la plupart des matières thermoplastiques (plastiques malléables sous la chaleur).

L'adhésion principale permet de faire fondre le polymère de type PTFE (qui fond sous les vibrations provoquées par les ultrasons) des GDL 2, 3 sur les renforts 4, 5 qui comprennent un polymère thermoplastique. C'est-à-dire que le polymère du type PTFE des GDL 2, 3 vient se coller sur les renforts en polymère thermoplastique. En particulier, lors de l'adhésion principale, les renforts 4, 5 conservent leur intégrité physique en ce que les premier et deuxième renforts 4, 5 ne fondent pas lors des première et deuxième adhésions. La différence de comportement aux ultrasons entre les renforts 4, 5 et les GDL 2, 3, provient majoritairement du fait que les GDL 2, 3 et les renforts 4, 5 ne sont pas fabriqués à partir des mêmes matériaux. Plus particulièrement, les GDL 2, 3 et les renforts 4, 5 sont de nature physico-chimique différente.

De manière générale, on entend par collage, le fait qu'un premier matériau A fond et se colle sur un deuxième matériau B qui ne fond pas. Ainsi, on obtient un collage par ultrasons lorsque les premier et deuxième matériaux A, B sont de nature physico-chimique différente. Par ailleurs, on entend par fusion, le fait que des premier et deuxième matériaux A, B fondent pour fusionner l'un avec l'autre. Ainsi, on obtient une fusion par ultrasons lorsque les premier et deuxième matériaux A, B sont de même nature physico-chimique.

Ainsi, on vient coller les zones Z1, Z2 des GDL 2, 3 sur les renforts 4, 5 de façon simple, rapide, localisée et sans apport de température extérieure.

Par ailleurs, le premier renfort 4 présente une face externe FRE1 tournée en regard de la première couche de diffusion des gaz 2 et une face interne FRI1 tournée en regard du deuxième renfort 5, le deuxième renfort 5 présente une face interne FRI2 tournée en regard du premier renfort 4 et une face externe FRE2 tournée en regard de la deuxième couche de diffusion des gaz 3.

Avantageusement, l'empilement comprend des premier et deuxième éléments adhésifs thermiquement activables 6, 7 situés respectivement sur les faces internes FRI1, FRI2 des premier et deuxième renforts 4, 5.

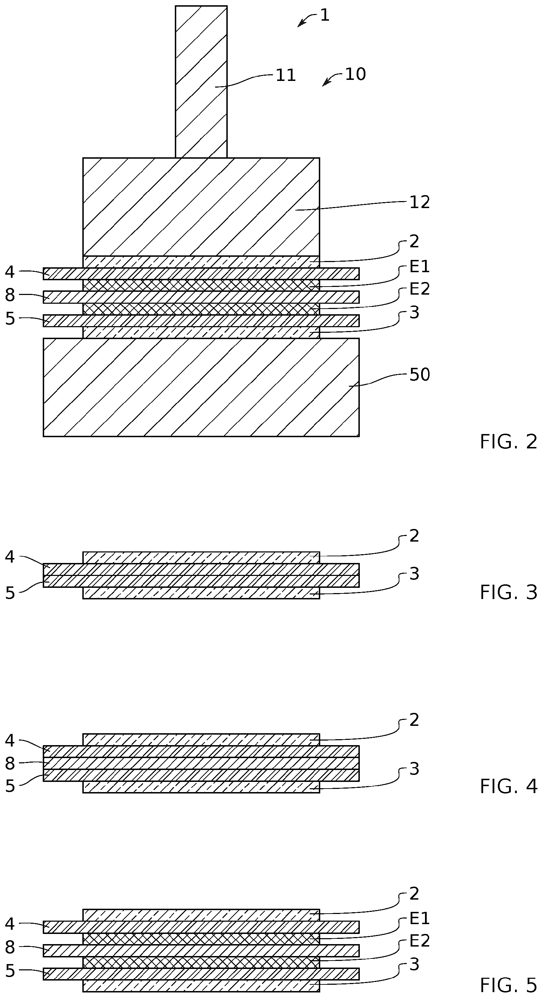

Selon un mode de mise en œuvre, le procédé comprend une fixation des premier et deuxième renforts 4, 5 comportant une soudure par ultrasons de sorte que le premier adhésif thermiquement activable 6 fusionne avec le deuxième adhésif thermiquement activable 7 pour fixer le premier renfort 4 au deuxième renfort 5, comme illustré sur la figure 3. En particulier, les premier et deuxième renforts 4, 5 conservent leur intégrité physique en ce que les premier et deuxième renforts 4, 5 ne fondent pas lors de la soudure par ultrasons. Ainsi on obtient un AME, dit quatre couches comprenant deux renforts 4, 5 et deux GDL 2, 3.

Selon un autre mode de mise en œuvre, l'empilement 1 comprend, selon la direction d'empilement Z, une membrane 8 située entre les premier et deuxième renforts 4, 5. La membrane 8 comprend une face supérieure tournée en regard du premier renfort 4 et une face inférieure tournée en regard du deuxième renfort 5.

Avantageusement, le procédé comprend une fixation des premier et deuxième renforts 4, 5 comportant une adhésion secondaire comportant une troisième adhésion par ultrasons de sorte qu'une partie de la face supérieure de la membrane 8 se colle sur le premier renfort 4, et une quatrième adhésion par ultrasons de sorte qu'une partie de la face inférieure de la membrane 8 se colle sur le deuxième renfort 4, les premier et deuxième renforts 4, 5 conservant une intégrité physique en ce que les premier et deuxième renforts 4, 5 ne fondent pas lors de l'adhésion secondaire, comme illustré sur la figure 4. Ainsi on obtient un AME, dit cinq couches comprenant deux renforts 4, 5, deux GDL 2, 3 et une membrane 8. En particulier, la membrane 8 comprend du PFSA (Acide Perfluorosulfoné ou « Perfluorosulfonated acid » en langue anglaise), qui fond lors des vibrations provoquées par les ultrasons, et qui permet de coller la membrane 8 aux renforts 4, 5. La membrane garde son intégrité physique, son épaisseur n'étant pas altérée de plus de 10%, voire moins de 5%.

Selon un autre mode de mise en œuvre, l'empilement 1 comprend, selon la direction d'empilement Z : une première électrode E1 située entre le premier renfort 4 et la membrane 8 ; et une deuxième électrode E2 située entre la membrane 8 et le deuxième renfort 5. Les électrodes E1, E2 peuvent être des couches catalytiques. Les électrodes E1, E2 comprennent dans leur composition, de préférence, du PFSA.

En outre, la première électrode E1 comprend une face supérieure tournée en regard du premier renfort 4 et la deuxième électrode E2 comprend une face inférieure tournée en regard du deuxième renfort 5. Par exemple, le procédé comprend une adhésion supplémentaire comportant une adhésion de la première électrode E1 par ultrasons de sorte qu'une partie de la face supérieure de la première électrode E1 se colle sur le premier renfort 4 et une adhésion de la deuxième électrode E2 par ultrasons de sorte qu'une partie de la face inférieure de la deuxième électrode E2 se colle sur le deuxième renfort 4, les premier et deuxième renforts 4, 5 conservant une intégrité physique en ce que les premier et deuxième renforts 4, 5 ne fondent pas lors de l'adhésion supplémentaire.

Avantageusement, le procédé comprend une soudure par ultrasons du premier adhésif thermiquement activable 6 sur le deuxième adhésif thermiquement activable 7. Ainsi on obtient un AME, dit sept couches comprenant deux renforts 4, 5, deux GDL 2, 3, une membrane 8, et deux électrodes E1, E2.

Par exemple, les première et deuxième électrodes E1, E2 peuvent être préassemblées avec la membrane 8 pour former un ensemble électrodes-membrane, dit CCM. Ainsi, le CCM peut être formé avant l'adhésion principale. En d'autres termes, l'adhésion principale peut être réalisée après l'assemblage des renforts 4, 5 avec le CCM ou en même temps. Les deux GDL 2, 3, présentes de part et d'autre de l'empilement 1, peuvent être assemblées en même temps sur les renforts 4, 5.

Par exemple, l'adhésion principale est effectuée après ou simultanément à l'adhésion secondaire.

Par exemple, l'adhésion principale est effectuée après ou simultanément à l'adhésion supplémentaire.

Avantageusement, les adhésions principale, secondaire et supplémentaire sont effectuées simultanément. Ainsi, on fournit un procédé simple et rapide.

La première soudure peut être effectuée avant ou simultanément à la deuxième soudure.

Sur la figure 1, on a représenté un mode de réalisation des renforts 4, 5. Les renforts 4, 5 peuvent avoir la forme d'un cadre pourvu d'une ouverture 40 pour permettre un contact des GDL 2, 3, avec les électrodes E1, E2.

Sur la figure 6 on a représenté une vue de dessus d'une GDL 2, 3 en premier plan collée sur un renfort 4, 5 en arrière-plan. La référence 41 représente les bords de la GDL 2, 3 et la référence 42 représente les bords de l'ouverture 40 du renfort 4, 5. Les première et deuxième zone Z1, Z2 sont délimitées par les bords de la GDL et les bords de l'ouverture 40 du renfort 4, 5.

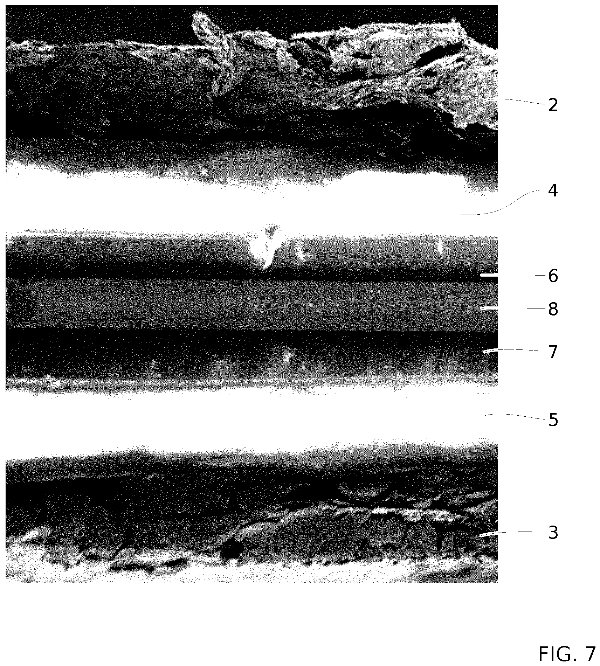

On a représenté sur la figure 7, une image d'un exemple d'AME, vue en coupe, obtenue à l'aide du procédé décrit ci-avant. Dans cet exemple, le collage des première et deuxième GDL 2, 3 sur respectivement les premier et deuxième renforts 4, 5 a été fait simultanément avec le collage par ultrasons des premier et deuxième renforts 4, 5 sur la membrane 8 et les deux GDL 2, 3 ont été collées en même temps sur chaque renfort 4, 5 (de part et d'autre de la membrane 8). La fréquence des ultrasons utilisée dans le cas présenté est de 35kHz. L'amplitude des ultrasons a été fixé à 22,4 µm et la force d'approche à 80 N. Pour contrôler la force d'approche, on peut utiliser une enclume 50, comme illustré à la figure 2. La plage de fonctionnement pour obtenir une adhésion par ultrasons qui permet une fixation efficace des différents composants et évite leur dégradation est de 0,25 à 1,25 MPa avec une énergie de 25 à 250 J/cm2. Le temps de des ultra-sons est inférieur à moins de 3 secondes.

Avantageusement, les GDL 2, 3 peuvent être collées sur les renforts 4, 5 après ou en même temps que la fixation des renforts 4, 5 sur le CCM. Un tel procédé de fabrication est différent de ce qui est fait « traditionnellement » par pressage à chaud ou ajout d'un matériau adhésif ou d'une colle. Par ailleurs, le procédé est plus rapide : de l'ordre de la seconde (voire même une « fraction » de seconde) quelle que soit la surface à coller, comparativement au pressage à chaud qui prend au moins plus d'une minute.

En outre, le procédé est simple car il ne nécessite aucun matériel supplémentaire nécessaire pour procéder aux adhésions principale, secondaire et supplémentaire. En effet, il n'est pas nécessaire d'utiliser un moule ou gaufrier; ni de gabarits de positionnement; ni d'outillages spécifiques, autres que l'appareil à ultrasons 10 et la tête sonotrode 12.

Le procédé est encore plus simple car il ne nécessite pas de rajout de colle, ni de rajout d'un matériau adhésif pour fixer les GDL 2, 3 sur les renforts 4, 5. Le procédé n'utilise pas non plus un apport de température extérieure (c'est-à-dire qu'il n'est pas nécessaire de chauffer des plateaux pour les presses à chaud, la température est générée naturellement par le fait que les ultrasons viennent mettre en mouvement les molécules). Le procédé permet, avantageusement, de fixer simultanément les différents composants (4, 5 ou 7 couches) de l'AME. On entend par fixation, une soudure, un collage ou un maintien par adhésif, de façon à relier mécaniquement deux pièces entre elles de sorte que leur séparation entraîne une destruction de matière.

En utilisant un appareil à ultrasons 10 pour réaliser les adhésions principale, secondaire et supplémentaire, on peut mettre en ligne l'assemblage des différents constituants de l'AME ; ce qui offre la possibilité d'obtenir des cadences de production importantes.

## Revendications

1. Procédé de fabrication d'un assemblage pour pile à combustible, comprenant une fourniture d'un empilement (1), l'empilement comprenant successivement selon une direction (Z), dite d'empilement, au moins :
• une première couche de diffusion des gaz (2) ;
• un premier renfort (4) ;
• un deuxième renfort (5) ; et
• une deuxième couche de diffusion des gaz (3) ;
le procédé comprenant :
• un placement des première et deuxième couches de diffusion des gaz (2, 3) de sorte que les couches de diffusion des gaz (2, 3) présentent respectivement deux première et deuxième faces tournées respectivement au regard des premier et deuxième renforts (4, 5) ; les première et deuxième faces présentant respectivement des première et deuxième zones ;
**caractérisé en ce que** le procédé comprend :
• une adhésion principale comprenant une première adhésion par ultrasons de sorte que la première zone se colle sur le premier renfort (4) pour fixer la première zone sur le premier renfort (4), et une deuxième adhésion par ultrasons de sorte que la deuxième zone se colle sur le deuxième renfort (5) pour fixer la deuxième zone sur le deuxième renfort (5), les premier et deuxième renforts (4, 5) conservant une intégrité physique **en ce que** les premier et deuxième renforts (4, 5) ne fondent pas lors de l'adhésion principale.

2. Procédé selon la revendication précédente, dans lequel, l'empilement comprend, selon la direction d'empilement, une membrane (8) située entre les premier et deuxième renforts (4, 5).

3. Procédé selon la revendication précédente, dans lequel la membrane (8) comprend une face supérieure tournée en regard du premier renfort (4) et une face inférieure tournée en regard du deuxième renfort (5), le procédé comprenant une adhésion secondaire comportant une troisième adhésion par ultrasons de sorte qu'une partie de la face supérieure de la membrane (8) se colle sur le premier renfort (4) et une quatrième adhésion par ultrasons de sorte qu'une partie de la face inférieure de la membrane (8) se colle sur le deuxième renfort (4), les premier et deuxième renforts (4, 5) conservant une intégrité physique en ce que les premier et deuxième renforts (4, 5) ne fondent pas lors de l'adhésion secondaire.

4. Procédé selon l'une quelconque des revendications précédentes, dans lequel, l'empilement comprend, selon la direction d'empilement :
• une première électrode (E1) située entre le premier renfort (4) et la membrane (8) ; et
• une deuxième électrode (E2) située entre la membrane (8) et le deuxième renfort (5).

5. Procédé selon la revendication précédente, dans lequel la première électrode (E1) comprend une face supérieure tournée en regard du premier renfort (4) et la deuxième électrode (E2) comprend une face inférieure tournée en regard du deuxième renfort (5), le procédé comprenant une adhésion supplémentaire comportant une adhésion de la première électrode (E1) par ultrasons de sorte qu'une partie de la face supérieure de la première électrode (E1) se colle sur le premier renfort (4) et une adhésion de la deuxième électrode (E2) par ultrasons de sorte qu'une partie de la face inférieure de la deuxième électrode (E2) se colle sur le deuxième renfort (4), les premier et deuxième renforts (4, 5) conservant une intégrité physique en ce que les premier et deuxième renforts (4, 5) ne fondent pas lors de l'adhésion supplémentaire.

6. Procédé selon la revendication 3, dans lequel l'adhésion principale est effectuée après ou simultanément à l'adhésion secondaire.

7. Procédé selon la revendication 5, dans lequel l'adhésion principale est effectuée après ou simultanément à l'adhésion supplémentaire.

8. Procédé selon les revendications 6 et 7 en combinaison, dans lequel les adhésions principale, secondaire et supplémentaire sont effectuées simultanément.

9. Procédé selon l'une quelconque des revendications précédentes, dans lequel la première adhésion est effectuée avant ou simultanément à la deuxième adhésion.

10. Procédé selon l'une quelconque des revendications précédentes, dans lequel, le premier renfort (4) présente une face externe tournée en regard de la première couche de diffusion des gaz (2) et une face interne tournée en regard du deuxième renfort (5), le deuxième renfort (5) présente une face interne tournée en regard du premier renfort (4) et une face externe tournée en regard de la deuxième couche de diffusion des gaz (3), et l'empilement (1) comprend des premier et deuxième éléments adhésifs thermiquement activables (6, 7) situés respectivement sur les faces internes des premier et deuxième renforts (4, 5).

11. Procédé selon la revendication précédente, comprenant une fixation des premier et deuxième renforts (4, 5) comportant une soudure par ultrasons de sorte que le premier adhésif thermiquement activable (6) fusionne avec le deuxième adhésif thermiquement activable (7) pour fixer le premier renfort (4) au deuxième renfort (5), et que les premier et deuxième renforts (4, 5) conservent leur intégrité physique en ce que les premier et deuxième renforts (4, 5) ne fondent pas lors de la soudure par ultrasons.

12. Assemblage pour pile à combustible, comprenant un empilement comportant successivement selon une direction, dite d'empilement, au moins :
• une première couche de diffusion des gaz (2) ;
• un premier renfort (4) ;
• un deuxième renfort (5) ; et
• une deuxième couche de diffusion des gaz (3) ;
les première et deuxième couches de diffusion des gaz (2, 3) présentant respectivement deux première et deuxième faces tournées respectivement au regard des premier et deuxième renforts (4, 5) ; les première et deuxième faces présentant respectivement des première et deuxième zones ;
**caractérisé en ce que** :
• la première zone est fixée sur le premier renfort (4), la fixation présentant une première adhésion avec collage de la première zone sur le premier renfort (4), sans fusion du premier renfort (4) ; et
• la deuxième zone est fixée sur le deuxième renfort (5), la fixation présentant une deuxième adhésion avec collage de la deuxième zone sur le deuxième renfort (5), sans fusion du deuxième renfort (5).

13. Assemblage selon la revendication 12, dans lequel, l'empilement comprend, selon la direction d'empilement, une membrane (8) située entre les premier et deuxième renforts (4, 5).

14. Assemblage selon la revendication précédente, dans lequel la membrane (8) comprend une face supérieure tournée en regard du premier renfort (4) et une face inférieure tournée en regard du deuxième renfort (5), une partie de la face supérieure de la membrane (8) est collée sur le premier renfort (4), et une partie de la face inférieure de la membrane (8) est collée sur le deuxième renfort (5).

15. Assemblage selon la revendication 13, dans lequel, l'empilement comprend, selon la direction d'empilement :
• une première électrode (E1) située entre le premier renfort (4) et la membrane (8) ; et
• une deuxième électrode (E2) située entre la membrane (8) et le deuxième renfort (5).

16. Assemblage selon la revendication précédente, dans lequel la première électrode (E1) comprend une face supérieure tournée en regard du premier renfort (4) et la deuxième électrode (E2) comprend une face inférieure tournée en regard du deuxième renfort (5), une partie de la face supérieure de la première électrode (E1) est collée sur le premier renfort (4) et une partie de la face inférieure de la deuxième électrode (E2) est collée sur le deuxième renfort (5).

17. Assemblage selon l'une quelconque des revendications 12 à 16, dans lequel le premier renfort (4) présente une face externe tournée en regard de la première couche de diffusion des gaz (2) et une face interne tournée en regard du deuxième renfort (5), le deuxième renfort (5) présente une face interne tournée en regard du premier renfort (4) et une face externe tournée en regard de la deuxième couche de diffusion des gaz (3), et l'empilement comprend des premier et deuxième éléments adhésifs thermiquement activables (6, 7) situés respectivement sur les faces internes des premier et deuxième renforts (4, 5).

18. Assemblage selon la revendication précédente, dans lequel le premier adhésif thermiquement activable (6) est fusionné avec le deuxième adhésif thermiquement activable (7), sans fusion des premier et deuxième renforts (4, 5).
